# EUROPEAN PATENT SPECIFICATION

(11) **EP 3 989 718 B1**
(45) Date of publication and mention of the grant of the patent: **17.06.2026**
(21) Application number: 20745327.5
(22) Date of filing: 19.06.2020
(51) Int. Cl.: A01K 5/00, A01D 42/00, A01D 43/06, A01K 5/02

(54) **METHOD OF FEEDING A GROUP OF ANIMALS AT A FEEDING LOCATION AND SYSTEM FOR PERFORMING THE METHOD**
VERFAHREN ZUM FÜTTERN EINER GRUPPE VON TIERE AN EINEM FUTTERPLATZ UND SYSTEM ZUM AUSFÜHREN DES VERFAHRENS
METHODE DE NOURISSAGE D'UN GROUPE D'ANIMAUX EN UN LIEU DE NOURISSAGE ET SYSTÈME POUR METTRE EN PRATIQUE LA MÉTHODE

(30) Priority: 26.06.2019 NL 2023390
(43) Date of publication of application: 04.05.2022
(73) Proprietor: Lely Patent N.V., 3147 PB Maassluis (NL)
(72) Inventor: BLOKLAND, Korstiaan Cornelis, 3147 PB Maassluis (NL); VAN DEN BERG, Karel, 3147 PB Maassluis (NL); PASTOOR, Jan Lambertus, 3147 PB Maassluis (NL); SIE, Howard, 3147 PB Maassluis (NL); LI, Yan, 3147 PB Maassluis (NL); VAN DIJK, Samuel, 3147 PB Maassluis (NL); HUYZER, Arie, 3147 PB Maassluis (NL)
(74) Representative: Octrooibureau Van der Lely N.V.
(86) International application number: PCT/NL2020/050393
(87) International publication number: WO 2020/263079

(56) References cited:
- WO-A1-2013/157931
- WO-A1-2015/178764
- CN-U- 205 284 168
- DE-B3- 102017 127 824
- FR-A1- 2 618 047

## Description

The present invention relates to a method of feeding a group of animals at a feeding location.

Such methods are known from the prior art. WO 2015/178764 A1 discloses a method for distributing feed over a plurality of separate feeding locations using a feed delivery device. The known methods have several drawbacks. They require manual labour or at least the use of machine operators and/or tractor drivers. There is a need for an improved, more automated method.

It is an object of the present invention to provide an improved method of feeding a group of animals at a feeding location.

The invention achieves the object at least in part by means of a method according to claim 1, in particular a method of feeding a group of animals at a feeding location comprising the following steps:
a) automatically determining an expected feed demand for the group of animals to be fed using a computer;
b) upon triggering by the computer automatically harvesting feed crop in a crop field using an autonomous, unmanned device;
c) automatically loading the harvested feed crop into a storage space provided on the autonomous, unmanned device;
d) automatically transporting the feed crop from the crop field to the feeding location by means of the autonomous, unmanned device;
e) automatically dosing harvested feed from the storage space of the autonomous, unmanned device to the animals at the feeding location, wherein the surface of the crop field already harvested is monitored and after step e) the autonomous, unmanned device is automatically returned to the crop field to a starting location in dependence on the surface of the crop field already harvested.

In this way, a completely automated method for determining a feed demand and then harvesting, transporting and dosing the harvested feed to the animals is realized. It constitutes a highly efficient method with feeding of fresh crop optimally adapted to the feed demand of the group of animals. The determination of the feed demand can be of a qualitative nature ("yes/no") or quantitative (e.g. "80 kilograms needed", "next feeding required in 1 hour", "80 kgs needed in 1 hour" or "100 kgs needed every 3 hours for the next 12 hours, then 60 kgs needed every 3 hours for the next 9 hours"). In the exceptional case when it is determined that there is no feed demand, or a very low one (close to zero), the next steps do not yet have to be carried out. Step a) is then repeated until a significant feed demand has been determined. Thus, unnecessary actions are avoided.

When a significant feed demand is determined, the animals are provided each time with freshly harvested crop. The feed demand can vary, as e.g. the consistence, texture, density, water content, nutritional value and taste of the crop may vary widely due to weather conditions, season, field conditions, etcetera. Of course, also the feeding habits of the group of animals vary in time. For this reason, a fixed feeding frequency would not be satisfactory. In contrast, the method according to the invention offers an automated, yet dedicated feeding system.

The steps of the method according to the invention may of course advantageously be performed repeatedly, thus ensuring a constant supply of freshly harvested feed crop to the animals at the feeding location.

Suitable and advantageous embodiments are described in the dependent claims, as well as in the description below.

Advantageously, in step a) a quantitative expected feed demand is determined. This is a practical implementation, enabling the supply of a quantitatively adequate amount of feed.

In a further embodiment of the device, in step e) a quantity as close as possible to the determined expected feed demand is dosed to the animals at the feeding location. In this way, the group of animals is optimally served. Not necessarily all harvested feed is unloaded from the autonomous, unmanned device, in case the determined feed demand is lower than the harvested amount of feed crop.

In a still further embodiment, step a) is performed in dependence on at least one of:
- the determined or estimated remaining feed crop amount at the feeding location;
- the size and/or composition of the group of animals to be fed;
- weather data;
- historical data.
This ensures a high accuracy in determining the feed demand.

The determined or estimated remaining feed crop amount at the feeding location is highly relevant for the determination of the expected feed demand. A large remaining feed amount will result in a low (or even momentarily zero) feed demand. Means for determining or estimating the remaining feed crop will be described further below.

The size and/or composition of the group of animals to be fed also plays a role when determining the expected feed demand. A large group will obviously consume more than a small one. The term "composition of the group" is meant here to encompass age distribution, breed of the animals, lactation stage groups, etcetera. The age, breed and/or lactation stage of the animals also influence(s) the feeding behaviour.

Weather data can also be considered when determining the expected feed demand. For example, extreme temperatures may cause the animals to eat less.

Historical data may be used also when determining the expected feed demand. For example, historically collected data, or data from a handbook, about the feeding habits of a certain animal or breed of animals over a certain period (e.g. 24 hours, in different seasons or lactation stages) can be taken into account.

Advantageously, the amount of feed crop collected in the storage space is monitored. If it is known how much feed already has been collected, this facilitates the method.

The surface of the crop field already harvested is monitored and after step e) the autonomous, unmanned device is automatically returned to the crop field to a starting location in dependence on the surface of the crop field already harvested. Thus, the autonomous device is ready for a next run. Advantageously, the steps of the method are being performed repeatedly, so that a constantly repeated supply of fresh feed crop to the animals at the feeding location is guaranteed. The monitoring can be done in a simple way, e.g. by registering the begin and end point of the harvesting trajectory, but preferably use is made of navigation means (known as such). The end point of the last harvesting run can be taken as the starting point for the next run.

In accordance with a further embodiment of the invention, in step a) the expected feed demand for the group of animals to be fed is determined as a function of time, the expected amount of feed crop collected in the storage space is also determined as a function of time, whereafter a next feeding time point or interval is scheduled in dependence on the determined expected feed demand and on the determined expected amount of feed crop collected in the storage space, and in step e) feed crop from the storage space of the autonomous, unmanned device is automatically dosed to the animals at the feeding location at the scheduled feeding time point or interval. In this way the system is further optimized. Comparing the progression in time of the expected feed demand with the progression in time of the expected collected amount of feed allows for the determination of a suitable next feeding moment (time point or time interval). For example, according to the method, as soon as there is enough feed collected (compared to the feed demand), the fresh feed can be supplied to the animals as soon as possible. Because of the way to travel to the feeding location (go and back) there will usually be temporarily a feed demand bigger than the collected feed amount when the device begins a new run; the capacity of the harvester is of course such that after a while the growing amount of collected feed will reach the (also continuously, but slower growing) feed demand. As soon as this is the case (or this is expected to be the case), the next feeding moment is scheduled.

Advantageously, before step d) an extra step is performed of determining a suitable path and an expected travel time for the autonomous, unmanned device from its expected location to the feeding location as a function of time. Anticipating the path to follow and the time this will take enables a more efficient system. Especially if the crop field is vast and/or the barn or other feeding location is relatively close-by, the position in the crop field from where the autonomous, unmanned device travels with the harvested crop to the feeding location weighs heavily for the expected travel time. Conversely, if the field is not so big and/or if the feeding location is relatively far away, the position in the crop field from where the autonomous, unmanned device travels with the harvested crop to the feeding location does not weigh heavily for the expected travel time. Anyway, the expected travel time is obviously relevant when scheduling a next feeding.

In an alternative embodiment, instead of determining multiple expected suitable paths as a function of time, it is possible to plan only one after scheduling the next feeding time point. This might be slightly suboptimal, but it is simpler and suffices if the crop field is relatively small and/or the barn or other feeding location is relatively close-by.

In accordance with yet another embodiment, the next feeding time point or interval is scheduled also in dependence on the determined suitable path and expected travel time for the autonomous, unmanned device. This enhances the accuracy of the system. Taking also into account the progression in time of the expected travel time and the expected route to the feeding location obviously enables a more accurate determination of the next suitable feeding time point or interval.

In a highly advantageous embodiment, the next feeding time point or interval is scheduled such that then the determined expected feed demand substantially equals the determined expected amount of feed crop collected in the storage space, taking into account the determined suitable path and expected travel time for the autonomous, unmanned device. This means that the next feeding is determined to happen as soon as the collected feed equals the feed demand, taking into account the travel path and time for the autonomous, unmanned device. At the moment the device arrives at the feeding location and doses the feed to the animals, the expected feed demand is exactly at the level of feed collected and transported there. In this way an optimal feeding frequence is achieved.

In a further embodiment, an extra step is performed of preparing a free passage for the autonomous, unmanned device along the determined suitable path. This ensures efficient and unhindered travel for the autonomous, unmanned device. For example, any gates on the determined path may be automatically opened in time, any barn doors at the feeding location may also be opened in time for the device to pass them. Of course, suitable automatically operable opening means are to be provided therefor.

The present invention further relates to a system according to claim 11 for performing the method of feeding a group of animals at a feeding location.

This system comprises an autonomous, unmanned device provided with automatic harvesting means, automatic loading means, a storage space, automatic feed dosing means and navigation means, the system comprising a computer configured for:
- determining an expected feed demand for the group of animals to be fed and
- triggering a harvesting action by means of the autonomous, unmanned device such that the system performs the method.

A highly flexible and efficient feeding system is thus implemented. The dosing means also comprise unloading means for automatically unloading the feed from the storage space of the autonomous, unmanned vehicle.

In an advantageous embodiment, a feed fence is provided at the feeding location and means for measuring the feed amount at the feed fence are provided on at least one of:
- the autonomous, unmanned device;
- a separate autonomous, unmanned feed pusher device provided at the feeding location;
- a fixed location near the feed fence.
This enables a reliable determination of the feed quantity at the feeding location. In case a separate autonomous feed pusher device is provided at the feeding location, this device may accomodate the measuring means, but they may also be provided on the autonomous, unmanned device or at a fixed location near the feed fence. The feed fence facilitates the dosing of the feed transported to the feeding location by means of the autonomous, unmanned device. The measuring means may comprise a laser, known as such.

In a further embodiment, feed pusher means for the feed at the feed fence are provided on at least one of:
- the autonomous, unmanned device;
- a separate autonomous, unmanned feed pusher device provided at the feeding location. This enables efficient feeding at the feeding location. The feed pusher means, known as such, enable the animals to consume substantially all feed dosed at the feeding location.

In yet another embodiment, animal location means are provided for monitoring the presence of animals at the feeding location. This enables a more accurate determination of the expected feed demand. The number of animals near the feeding location obviously influences the expected feed demand. The animal location means can comprise one or more cameras.

Advantageously, monitoring means for the amount of feed crop collected in the storage space are provided, said means comprising at least one of:
- weighing means such as a weighing floor in the storage space;
- feed height sensors provided at, in or near the storage space.
This constitutes a simple, yet reliable construction.

In accordance with a further embodiment, the automatic feed dosing means comprise a side discharge. This is a practical construction, which works especially well in combination with a feed fence.

Means for measuring the feed height at the feeding location can be provided. This is a simple and straightforward implementation of feed amount measuring means. A laser has been proven to be suitable.

In a further embodiment, image recording means, such as cameras, are provided for determining or estimating the amount of feed crop remaining at the feeding location. This constitutes an alternative to the feed height measuring means. The cameras may be installed fixedly at the feeding location.

The invention will now be further explained with reference to the following Figures.
Figure 1 shows an autonomous, unmanned device according to the invention;
Figure 2 shows a feeding system according to the invention.

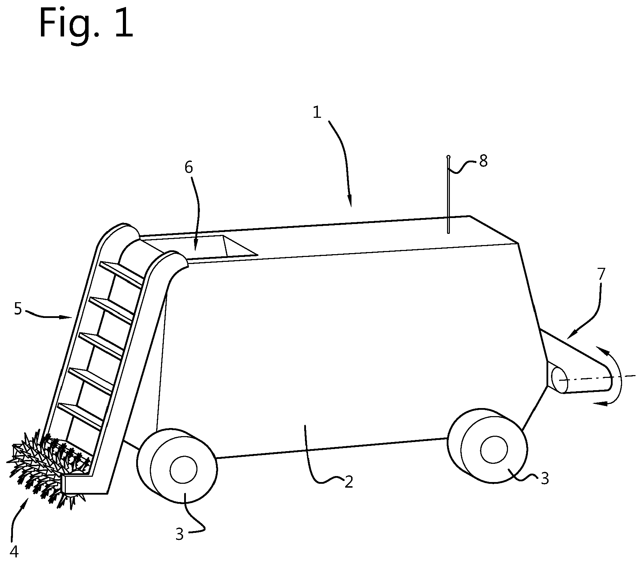

In Figure 1 an embodiment of an autonomous, unmanned device 1 according to the invention is depicted. The autonomous, unmanned device 1 is a vehicle with a body 2 and wheels 3. The front side (in the drawing left) is provided with automatic harvesting means 4, here shown in the form of an automatic mowing device 4. Furthermore, there are automatic loading means 5 for conveying the harvested crop into a storage space 6 inside the body 2. At the rear side (in the drawing right) there are provided means 7 for automatically unloading and dosing feed at the feeding location, here shown as a side discharge 7. An antenna 8 on top of the body 2 is provided for communication purposes.

Not shown are drive means for the autonomous, unmanned device 1 and a computer (or other control means) with the aid of which the autonomous, unmanned device 1 is controlled and operated. This computer comprises i.a. a processor and navigation means. It can be included in the autonomous, unmanned device 1, but it can also be located elsewhere and communicate with the vehicle 1 via antenna 8.

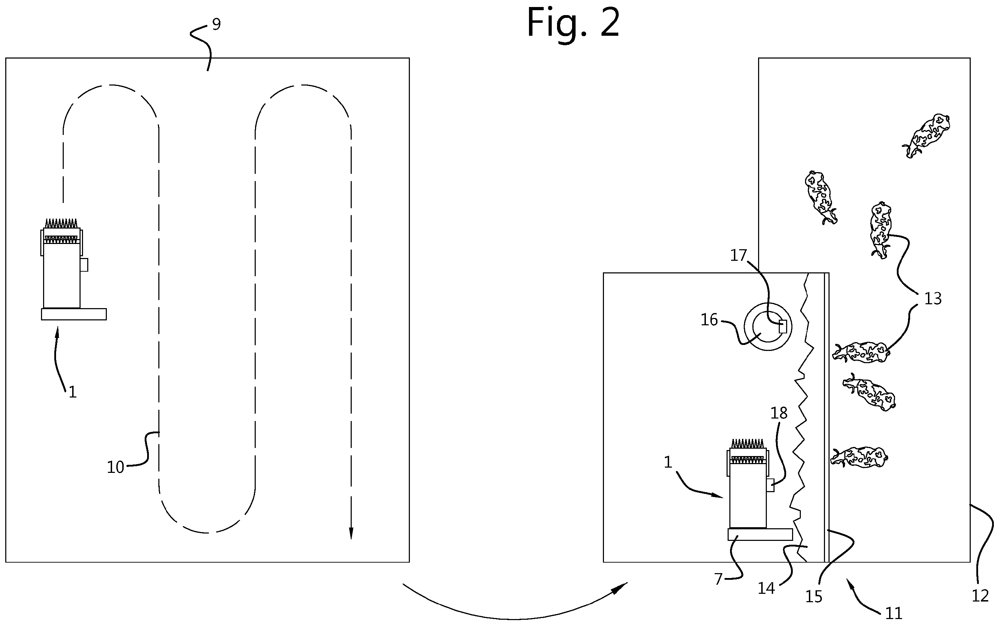

In Figure 2 a feeding system according to the invention is shown. The autonomous, unmanned device 1 moves over a crop field 9, for example a grass field, following a path 10, under the control of the computer. When the autonomous, unmanned device 1 has finished mowing the grass, or when in accordance with the invention (as further elucidated below) a certain feed demand has been determined, it moves to the feeding location 11. In the embodiment shown, this is a barn or stable 12 in which cows 13 can move freely. Feed 14 is provided to the animals 13 at a feed fence 15.

The autonomous, unmanned device 1 moves along the feed fence 15 while unloading and dosing the feed 14 to the cows 13 via the side discharge 7. Also shown is an autonomous, unmanned feed pusher device 16 provided with a feed amount sensor, for example a feed height sensor 17, such as a laser. Such autonomous, unmanned feed pusher devices are known as such. They are used to push the feed 14, if necessary, back within reach of the cows 13 at the feed fence 15. The feed pusher 16 can communicate with the computer and send feed height measurements.

Alternatively, the system can function well without such a separate autonomous, unmanned feed pusher device 16, in case the autonomous, unmanned device 1 itself is provided with feed pusher means (not shown). Also, the autonomous, unmanned device 1 can be provided with a feed amount sensor, such as a feed height sensor 18, for example a laser.

After supplying the animals 13 in the barn 12 with feed 14, the autonomous, unmanned device 1 returns to the crop field 9 for a next harvesting run.

According to the invention, a method of feeding a group of animals 13 at a feeding location 11 comprises the following steps:
a) automatically determining an expected feed demand for the group of animals 13 to be fed using a computer;
b) automatically harvesting feed crop 14 in a crop field 9 using an autonomous, unmanned device 1;
c) automatically loading the harvested feed crop 14 into a storage space 6 provided on the autonomous, unmanned device 1;
d) automatically transporting the feed crop 14 from the crop field 9 to the feeding location 11 by means of the autonomous, unmanned device 1;
e) automatically dosing harvested feed 14 from the storage space 6 of the autonomous, unmanned device 1 to the animals 13 at the feeding location 11 wherein the surface of the crop field 9 already harvested is monitored and after step e) the autonomous, unmanned device 1 is automatically retumed to the crop field 9 to a starting location in dependence on the surface of the crop field 9 already harvested.

In step a) the computer (not shown) determines an expected feed demand for the animals 13. The determination of the feed demand can be qualitative ("yes/no") or quantitative (e.g. "80 kilograms needed", "next feeding required in 1 hour", "80 kgs needed in 1 hour" or "100 kgs needed every 3 hours for the next 12 hours, then 60 kgs needed every 3 hours for the next 9 hours"). In the exceptional case when it is determined that there is no momentary feed demand (for example, when a lot of feed is already present at the feeding location and the animals are asleep), or a very low one (close to zero), the next steps of the method do not yet have to be carried out. Step a) is then repeated until a significant feed demand has been determined. Thus, unnecessary actions are avoided. As soon as a significant feed demand has been determined, the next steps are performed.

The feed 14 mowed in the field 9 by the autonomous, unmanned device 1 in step b) using the mowing means 4 is loaded into the storage space 6 of the autonomous, unmanned device 1 in step c) using the loading means 5. Then the feed 14 is transported with the autonomous, unmanned device 1 from the field 9 to the feeding location 11 in step d). In step e) the feed 14 is unloaded from the storage space 6 of the autonomous, unmanned device 1 and dosed to the animals 13 at the feeding location 11 using the side discharge 7. Then the device 1 is returned to a starting location and the method steps are repeated. A continuous supply of fresh grass 14 to the cows 13 in the barn 12 is thus established.

Thus, a completely automated method for determining a feed demand and then harvesting, transporting and dosing the harvested feed 14 to the animals 13 is realized. The feeding of fresh crop 14 is optimally adapted to the feed demand of the group of animals 13. This feed demand is then processed in the computer, which triggers the corresponding harvesting action by means of the autonomous, unmanned device 1.

The feed demand can vary, as e.g. the consistence, texture, density, water content, nutritional value and taste of the crop 14 may vary widely due to weather conditions, season, field conditions, etcetera. Of course, also the feeding habits of the group of animals 13 vary in time. A fixed feeding frequency would therefore not be suitable. In contrast, the method according to the invention offers a completely automated, yet dedicated feeding system.

In step e) a quantity as close as possible to the determined expected feed demand is dosed to the animals 13 at the feeding location 11. It is noted that not necessarily all harvested feed 14 is unloaded from the autonomous, unmanned device 1, in case the determined feed demand is lower than the harvested amount of feed crop 14. It is also possible that the storage space 6 of the autonomous, unmanned device 1 momentarily does not contain enough feed 14 to satisfy the present feed demand. In that case, the storage space 6 is emptied completely and the autonomous, unmanned device 1 begins a next run.

Step a) is performed in dependence on at least one of:
- the determined or estimated remaining feed crop amount at the feeding location 11;
- the size and/or composition of the group of animals 13 to be fed;
- weather data;
- historical data.

The determined or estimated remaining feed crop amount at the feeding location 11 is highly relevant for the determination of the expected feed demand. A large remaining feed amount 14 will result in a low (or even momentarily zero) feed demand. Means for determining or estimating the remaining amount of feed crop are, for example, a feed height sensor 18 (such as a laser) on the autonomous, unmanned device 1 or a feed height sensor 17 (such as a laser) on the separate autonomous, unmanned feed pusher device 16. Such a feed height sensor may also be provided (not shown) fixedly near the feed fence 15.

The feed amount sensors can communicate with the computer, so that the computer can take the measurements into account when determining the feed demand. The computer can also have data available regarding the size and/or composition of the group of animals 13 to be fed. The term "composition of the group" is meant here to encompass age distribution, breed of the animals 13, lactation stage groups, etcetera. The age, breed and/or lactation stage of the animals 13 also influence(s) the feeding behaviour. These data can be taken into account by the computer for his calculations, just like weather or historical data. For example, the computer can have data on the influence of extreme temperatures on the feeding habits of the animals 13, and/or data on the feeding habits of a certain animal or breed of animals over a certain period (e.g. 24 hours, in different seasons or lactation stages). The more data the computer has available, the more precise it can predict the feed demand.

The amount of feed crop 14 collected in the storage space 6 is monitored. Monitoring means for the amount of feed crop 14 collected in the storage space 6 can be weighing means such as a weighing floor in the storage space 6 or feed height sensors (not shown) provided at, in or near the storage space 6.

The surface of the crop field 9 already harvested is monitored by means of the computer with the help of the navigation means and after step e) the autonomous, unmanned device 1 is automatically retumed to the crop field 9 to a starting location in dependence on the surface of the crop field 9 already harvested, as registered in the computer with the help of the navigation means. The autonomous device 1 is then ready for a next harvesting run. The end point of the last harvesting run is taken as the starting point for the next run.

In step a) the computer can determine the expected feed demand for the group of animals 13 to be fed as a function of time and the expected amount of feed crop 14 collected in the storage space 6 also. With these predictions the computer can schedule a next feeding time point (or time interval) in dependence on the determined expected feed demand and on the determined expected amount of feed crop 14 collected in the storage space 6. Then in step e) feed crop from the storage space 6 of the autonomous, unmanned device 1 is automatically dosed to the animals 13 at the feeding location 11 at this scheduled feeding time point or interval.

As soon as there is enough feed 14 collected (compared to the feed demand), the fresh feed 14 can be supplied to the animals 13. Because of the way to travel 10 to the feeding location 11 (go and back) there will usually be temporarily a feed demand bigger than the collected feed amount when the device begins a new run; the capacity of the mower 4 is of course such that after a while the growing amount of collected feed 14 will reach the (also continuously, but slower growing) feed demand. As soon as this is the case (or this is expected to be the case), the next feeding moment is scheduled.

Before step d) an extra step is performed of determining a suitable path 10 and an expected travel time for the autonomous, unmanned device 1 from its expected location to the feeding location 11, also as a function of time. So the computer anticipates the path 10 to follow and the time this will take. In this way, the computer can also take into account the expected travel time when scheduling the next feeding.

It is noted that instead of determining multiple expected suitable paths as a function of time, for reasons of economy it is possible that the computer plans only one for scheduling the next feeding time point.

The next feeding time point or interval is scheduled such that then the determined expected feed demand substantially equals the determined expected amount of feed crop 14 collected in the storage space 6, taking into account the determined suitable path 10 and expected travel time for the autonomous, unmanned device 1. The next feeding is determined to happen as soon as the collected feed 14 equals the feed demand, taking into account the travel path 10 and time for the autonomous, unmanned device 1. At the moment the device 1 arrives at the feeding location 11 and doses the feed 14 to the animals 13, the expected feed demand is exactly at the level of feed collected and transported there. In this way an optimal feeding frequence is achieved.

It is noted that in Figure 2 the path 10 for the autonomous, unmanned device 1 is only a schematic illustration. Normally, the device 1 will have to move up and down the field 9 quite a number of times. As soon as the computer has decided that the device 1 should go to the barn 12 for a next feeding, having taken into account the expected feed demand (as determined with e.g. the feed height sensors 17 or 18), the collected amount of feed 14 in the storage space 6 (as determined e.g. with the weighing floor) and the expected travel path and time from the current position of the device 1 to the feeding location 11 (as determined with the navigation means), the device leaves the field 9 along the optimal path 10 calculated by the computer and moves towards the barn 12. This is not exactly illustrated in Figure 2. The device might leave the field 9 somewhere on the side, for example, if that is a shorter way.

In an embodiment not shown, an extra step is performed of preparing a free passage for the autonomous, unmanned device 1 along the determined suitable path 10, to ensure efficient and unhindered travel for the autonomous, unmanned device 1. Any gates (not shown) on the determined path 10 may be automatically opened in time, any barn doors (not shown) at the barn 12 may also be opened in time for the device 1 to pass them. In this case, suitable automatically operable opening means are to be provided therefor, which can communicate with and be controlled by the computer.

The feed fence 15 provided at the feeding location 11 in the barn 12 facilitates the feed dosing. The side discharge 7 of the autonomous, unmanned device 1 works especially well in combination with the feed fence 15. It also enables the use of feed pushing means, either on the autonomous, unmanned device 1 or on the separate autonomous feed pusher device 16.

In a further embodiment, which is not shown, animal location means, such as cameras, are provided for monitoring the presence of animals 13 at the feeding location 11 to enable a more accurate determination of the expected feed demand. For example, the number of animals 13 within a certain distance of the feed fence 15 can be counted.

Finally, in a further embodiment, which is not shown, cameras are provided for determining or estimating the amount of feed crop 14 remaining at the feeding location 11, as an alternative to the feed height measuring means 17,18. The computer uses image analysis techniques for this, which are known as such. The cameras may be installed fixedly at the feeding location 11.

## Claims

1. A method of feeding a group of animals (13) at a feeding location (11) comprising the following steps:
a) automatically determining an expected feed demand for the group of animals (13) to be fed using a computer;
b) upon triggering by the computer automatically harvesting feed crop (14) in a crop field (9) using an autonomous, unmanned device (1);
c) automatically loading the harvested feed crop (14) into a storage space (6) provided on the autonomous, unmanned device (1);
d) automatically transporting the feed crop (14) from the crop field (9) to the feeding location (11) by means of the autonomous, unmanned device (1);
e) automatically dosing harvested feed (14) from the storage space (6) of the autonomous, unmanned device (1) to the animals (13) at the feeding location (11), wherein the surface of the crop field (9) already harvested is monitored and after step e) the autonomous, unmanned device (1) is automatically returned to the crop field (9) to a starting location in dependence on the surface of the crop field (9) already harvested.

2. Method according to claim 1, wherein in step a) a quantitative expected feed demand is determined.

3. Method according to claim 2, wherein in step e) a quantity as close as possible to the determined expected feed demand is dosed to the animals (13) at the feeding location (11).

4. Method according to any one of claims 1 - 3, wherein step a) is performed in dependence on at least one of:
- the determined or estimated remaining feed crop amount at the feeding location (11);
- the size and/or composition of the group of animals (13) to be fed;
- weather data;
- historical data.

5. Method according to any one of claims 1 - 4, wherein the amount of feed crop (14) collected in the storage space (6) is monitored.

6. Method according to claim 5, wherein in step a) the expected feed demand for the group of animals (13) to be fed is determined as a function of time, the expected amount of feed crop (14) collected in the storage space (6) is also determined as a function of time, whereafter a next feeding time point or interval is scheduled in dependence on the determined expected feed demand and on the determined expected amount of feed crop (14) collected in the storage space (6), and in step e) feed crop (14) from the storage space (6) of the autonomous, unmanned device (1) is automatically dosed to the animals (13) at the feeding location (11) at the scheduled feeding time point or interval.

7. Method according to claim 6, wherein before step d) an extra step is performed of determining a suitable path (10) and an expected travel time for the autonomous, unmanned device (1) from its expected location to the feeding location (11) as a function of time.

8. Method according to any one of claims 6 - 7, wherein the next feeding time point or interval is scheduled also in dependence on the determined suitable path (10) and expected travel time for the autonomous, unmanned device (1).

9. Method according to claim 8, wherein the next feeding time point or interval is scheduled such that then the determined expected feed demand substantially equals the determined expected amount of feed crop (14) collected in the storage space (6), taking into account the determined suitable path (10) and expected travel time for the autonomous, unmanned device (1).

10. Method according to any one of claims 7 - 9, wherein an extra step is performed of preparing a free passage for the autonomous, unmanned device (1) along the determined suitable path (10).

11. A system comprising an autonomous, unmanned device (1) provided with automatic harvesting means (4), automatic loading means (5), a storage space (6), automatic feed dosing means (7) and navigation means, the system comprising a computer configured for:
- determining an expected feed demand for the group of animals (13) to be fed and
- triggering a harvesting action by means of the autonomous, unmanned device such that the system performs the method according to any one of claims 1-10.

12. System according to claim 11, wherein a feed fence (15) is provided at the feeding location (11) and means(17, 18) for measuring the feed amount at the feed fence (15) are provided on at least one of:
- the autonomous, unmanned device (1);
- a separate autonomous, unmanned feed pusher device (16) provided at the feeding location (11);
- a fixed location near the feed fence (15).

13. System according to claim 12, wherein feed pusher means for the feed at the feed fence (15) are provided on at least one of:
- the autonomous, unmanned device (1);
- a separate autonomous, unmanned feed pusher device (16) provided at the feeding location (11).

14. System according to any one of claims 11 - 13, wherein animal location means are provided for monitoring the presence of animals (13) at the feeding location (11).

15. System according to any one of claims 11 - 14, wherein monitoring means for the amount of feed crop (14) collected in the storage space (6) are provided, said means comprising at least one of:
- weighing means such as a weighing floor in the storage space;
- feed height sensors provided at, in or near the storage space.

16. System according to any one of claims 11 - 15, wherein the automatic feed dosing means (7) comprise a side discharge (7).

17. System according to any one of claims 11 - 16, wherein means (17, 18) for measuring the feed height at the feeding location are provided.

18. System according to any one of claims 11 - 17, wherein image recording means are provided for determining or estimating the amount of feed crop (14) remaining at the feeding location (11).

## Patentansprüche

1. Verfahren zum Füttern einer Gruppe von Tieren (13) an einem Fütterungsort (11), umfassend die folgenden Schritte:
a) automatisches Bestimmen eines erwarteten Futterbedarfs für die Gruppe von zu fütternden Tieren (13) unter Verwendung eines Computers;
b) bei Auslösen durch den Computer, automatisches Ernten von Futterpflanzen (14) in einem Pflanzenfeld (9) unter Verwendung einer autonomen, unbemannten Vorrichtung (1);
c) automatisches Laden der geernteten Futterpflanzen (14) in einen Lagerraum (6), der auf der autonomen, unbemannten Vorrichtung (1) bereitgestellt ist;
d) automatisches Transportieren der Futterpflanzen (14) von dem Pflanzenfeld (9) zum Fütterungsort (11) mittels der autonomen, unbemannten Vorrichtung (1);
e) automatisches Dosieren von geerntetem Futter (14) aus dem Lagerraum (6) der autonomen, unbemannten Vorrichtung (1) zu den Tieren (13) am Fütterungsort (11), wobei die Oberfläche des bereits geernteten Pflanzenfeldes (9) überwacht wird und nach Schritt e) die autonome, unbemannte Vorrichtung (1) in Abhängigkeit von der Oberfläche des bereits geernteten Pflanzenfeldes (9) zu dem Pflanzenfeld (9) zu einem Ausgangsort automatisch zurückgeführt wird.

2. Verfahren nach Anspruch 1, wobei in Schritt a) ein quantitativer erwarteter Futterbedarf bestimmt wird.

3. Verfahren nach Anspruch 2, wobei in Schritt e) eine Quantität, die so nahe wie möglich am bestimmten erwarteten Futterbedarf liegt, zu den Tieren (13) am Fütterungsort (11) dosiert wird.

4. Verfahren nach einem der Ansprüche 1-3, wobei Schritt a) in Abhängigkeit von mindestens einem von Folgendem durchgeführt wird:
- der bestimmten oder geschätzten Restmenge an Futterpflanzen am Fütterungsort (11);
- der Größe und/oder Zusammensetzung der Gruppe von zu fütternden Tieren (13);
- Wetterdaten;
- historischen Daten.

5. Verfahren nach einem der Ansprüche 1-4, wobei die Menge an im Lagerraum (6) gesammelten Futterpflanzen (14) überwacht wird.

6. Verfahren nach Anspruch 5, wobei in Schritt a) der erwartete Futterbedarf für die Gruppe von zu fütternden Tieren (13) als eine Zeitfunktion bestimmt wird, die erwartete Menge an im Lagerraum (6) gesammelten Futterpflanzen (14) auch als eine Zeitfunktion bestimmt wird, wonach ein nächster Fütterungszeitpunkt oder - intervall in Abhängigkeit von dem bestimmten erwarteten Futterbedarf und von der bestimmten erwarteten Menge an im Lagerraum (6) gesammelten Futterpflanzen (14) geplant wird, und wobei in Schritt e) Futterpflanzen (14) aus dem Lagerraum (6) der autonomen, unbemannten Vorrichtung (1) automatisch zu den Tieren (13) am Fütterungsort (11) zum geplanten Fütterungszeitpunkt oder -intervall dosiert wird.

7. Verfahren nach Anspruch 6, wobei vor Schritt d) ein zusätzlicher Schritt zum Bestimmen eines geeigneten Pfades (10) und einer erwarteten Fahrzeit für die autonome, unbemannte Vorrichtung (1) von ihrem erwarteten Ort zum Fütterungsort (11) als eine Zeitfunktion durchgeführt wird.

8. Verfahren nach einem der Ansprüche 6-7, wobei der nächste Fütterungszeitpunkt oder -intervall auch in Abhängigkeit von dem bestimmten geeigneten Pfad (10) und der erwarteten Fahrzeit für die autonome, unbemannte Vorrichtung (1) geplant wird.

9. Verfahren nach Anspruch 8, wobei der nächste Fütterungszeitpunkt oder -intervall so geplant wird, dass dann unter Berücksichtigung des bestimmten geeigneten Pfades (10) und der erwarteten Fahrzeit für die autonome, unbemannte Vorrichtung (1) der bestimmte erwartete Futterbedarf im Wesentlichen gleich der bestimmten erwarteten Menge an im Lagerraum (6) gesammelten Futterpflanzen (14) ist.

10. Verfahren nach einem der Ansprüche 7-9, wobei ein zusätzlicher Schritt zum Vorbereiten eines freien Durchgangs für die autonome, unbemannte Vorrichtung (1) entlang des bestimmten geeigneten Pfades (10) durchgeführt wird.

11. System, das eine autonome, unbemannte Vorrichtung (1) umfasst, die mit automatischen Erntemitteln (4), automatischen Lademitteln (5), einem Lagerraum (6), automatischen Futterdosiermitteln (7) und Navigationsmitteln versehen ist, wobei das System einen Computer umfasst, der zu Folgendem ausgelegt ist:
- Bestimmen eines erwarteten Futterbedarfs für die Gruppe von zu fütternden Tieren (13) und
- Auslösen einer Ernteaktion mittels der autonomen, unbemannten Vorrichtung, so dass das System das Verfahren nach einem der Ansprüche 1-10 durchführt.

12. System nach Anspruch 11, wobei ein Futterzaun (15) am Fütterungsort (11) bereitgestellt ist und Mittel (17, 18) zum Messen der Futtermenge am Futterzaun (15) an mindestens einem von Folgendem bereitgestellt sind:
- der autonomen, unbemannten Vorrichtung (1);
- einer separaten autonomen, unbemannten Futterschiebevorrichtung (16), die am Fütterungsort (11) bereitgestellt ist;
- einem festen Ort in der Nähe des Futterzauns (15).

13. System nach Anspruch 12, wobei Futterschiebemittel für das Futter am Futterzaun (15) an mindestens einem von Folgendem bereitgestellt sind:
- der autonomen, unbemannten Vorrichtung (1);
- einer separaten autonomen, unbemannten Futterschiebevorrichtung (16), die am Fütterungsort (11) bereitgestellt ist.

14. System nach einem der Ansprüche 11-13, wobei Tierortungsmittel zum Überwachen der Anwesenheit von Tieren (13) am Fütterungsort (11) bereitgestellt sind.

15. System nach einem der Ansprüche 11-14, wobei Überwachungsmittel für die Menge an im Lagerraum (6) gesammelten Futterpflanzen (14) bereitgestellt sind, wobei die Mittel mindestens eines von Folgendem umfassen:
- Wiegemittel, wie beispielsweise einen Wiegeboden im Lagerraum;
- Futterhöhensensoren, die am, in oder in der Nähe des Lagerraums bereitgestellt sind.

16. System nach einem der Ansprüche 11-15, wobei die automatischen Futterdosiermittel (7) einen seitlichen Auslass (7) umfassen.

17. System nach einem der Ansprüche 11-16, wobei Mittel (17, 18) zum Messen der Futterhöhe am Fütterungsort bereitgestellt sind.

18. System nach einem der Ansprüche 11-17, wobei Bildaufzeichnungsmittel zum Bestimmen oder Schätzen der Menge an am Fütterungsort (11) verbleibenden Futterpflanzen (14) bereitgestellt sind.

## Revendications

1. Procédé d'alimentation d'un groupe d'animaux (13) à un emplacement d'alimentation (11) comprenant les étapes suivantes :
a) la détermination automatique d'une demande attendue d'aliment pour le groupe d'animaux (13) à nourrir à l'aide d'un ordinateur ;
b) sur déclenchement par l'ordinateur, la récolte automatique de culture fourragère (14) dans un champ de culture (9) à l'aide d'un dispositif autonome sans pilote (1) ;
c) le chargement automatique de la culture fourragère récoltée (14) dans un espace de stockage (6) prévu sur le dispositif autonome sans pilote (1) ;
d) le transport automatique de la culture fourragère (14) du champ de culture (9) à l'emplacement d'alimentation (11) au moyen du dispositif autonome sans pilote (1) ;
e) le dosage automatique de culture fourragère récoltée (14) de l'espace de stockage (6) du dispositif autonome sans pilote (1) aux animaux (13) à l'emplacement d'alimentation (11), la surface du champ de culture (9) déjà récolté étant surveillée et après l'étape e) le dispositif autonome sans pilote (1) étant automatiquement ramené au champ de culture (9) vers un emplacement de départ en fonction de la surface du champ de culture (9) déjà récolté.

2. Procédé selon la revendication 1, à l'étape a) une demande attendue d'aliment quantitative étant déterminée.

3. Procédé selon la revendication 2, à l'étape e) une quantité aussi proche que possible de la demande attendue d'aliment déterminée étant dosée pour les animaux (13) à l'emplacement d'alimentation (11).

4. Procédé selon l'une quelconque des revendications 1 à 3, l'étape a) étant réalisée en fonction d'au moins l'un parmi :
- la quantité de culture fourragère restante déterminée ou estimée à l'emplacement d'alimentation (11) ;
- la taille et/ou la composition du groupe d'animaux (13) à nourrir ;
- des données météorologiques ;
- des données historiques.

5. Procédé selon l'une quelconque des revendications 1 à 4, la quantité de culture fourragère (14) collectée dans l'espace de stockage (6) étant surveillée.

6. Procédé selon la revendication 5, à l'étape a) la demande attendue d'aliment pour le groupe d'animaux (13) à nourrir étant déterminée en fonction du temps, la quantité attendue de culture fourragère (14) collectée dans l'espace de stockage (6) étant également déterminée en fonction du temps, après quoi un prochain instant ou intervalle d'alimentation est planifié en fonction de la demande attendue d'aliment déterminée et de la quantité attendue déterminée de culture fourragère (14) collectée dans l'espace de stockage (6), et à l'étape e), la culture fourragère (14) provenant de l'espace de stockage (6) du dispositif autonome sans pilote (1) étant automatiquement dosée pour les animaux (13) à l'emplacement d'alimentation (11) à l'instant ou intervalle d'alimentation planifié.

7. Procédé selon la revendication 6, avant l'étape d) une étape supplémentaire étant effectuée de détermination d'un trajet approprié (10) et d'un temps de trajet attendu pour le dispositif autonome sans pilote (1) depuis son emplacement attendu jusqu'à l'emplacement d'alimentation (11) en fonction du temps.

8. Procédé selon l'une quelconque des revendications 6 et 7, le prochain instant ou intervalle d'alimentation étant planifié également en fonction de la trajectoire appropriée déterminée (10) et du temps de trajet attendu pour le dispositif autonome sans pilote (1).

9. Procédé selon la revendication 8, le prochain instant ou intervalle d'alimentation étant planifié de telle sorte que la demande attendue d'aliment déterminée soit sensiblement égale à la quantité attendue déterminée de culture fourragère (14) collectée dans l'espace de stockage (6), en tenant compte du trajet approprié déterminé (10) et du temps de déplacement attendu pour le dispositif autonome sans pilote (1).

10. Procédé selon l'une quelconque des revendications 7 à 9, une étape supplémentaire étant effectuée de préparation d'un passage libre pour le dispositif autonome sans pilote (1) le long du trajet approprié déterminé (10).

11. Système comprenant un dispositif autonome sans pilote (1) pourvu de moyens de récolte automatiques (4), de moyens de chargement automatiques (5), d'un espace de stockage (6), de moyens automatiques de dosage d'aliment (7) et de moyens de navigation, le système comprenant un ordinateur configuré pour :
- déterminer une demande attendue d'aliment pour le groupe d'animaux (13) à nourrir et
- déclencher une action de récolte au moyen du dispositif autonome sans pilote afin que le système réalise le procédé selon l'une quelconque des revendications 1 à 10.

12. Système selon la revendication 11, une barrière d'alimentation (15) étant prévue à l'emplacement d'alimentation (11) et des moyens (17, 18) pour mesurer la quantité d'aliment au niveau de la barrière d'alimentation (15) étant prévu sur au moins l'un des éléments suivants :
- le dispositif autonome sans pilote (1) ;
- un dispositif pousseur d'aliment autonome sans pilote séparé (16) prévu à l'emplacement d'alimentation (11) ;
- un emplacement fixe près de la barrière d'alimentation (15).

13. Système selon la revendication 12, des moyens pousseurs d'aliment pour l'aliment au niveau de la barrière d'alimentation (15) étant prévus sur au moins l'un des éléments suivants :
- le dispositif autonome sans pilote (1) ;
- un dispositif pousseur d'aliment autonome sans pilote séparé (16) prévu à l'emplacement d'alimentation (11).

14. Système selon l'une quelconque des revendications 11 à 13, des moyens de localisation d'animaux étant prévus pour surveiller la présence d'animaux (13) à l'emplacement d'alimentation (11).

15. Système selon l'une quelconque des revendications 11 à 14, des moyens de surveillance de la quantité de culture fourragère (14) collectée dans l'espace de stockage (6) étant prévus, lesdits moyens comprenant au moins l'un des éléments suivants :
- des moyens de pesée, tel qu'un plancher de pesée dans l'espace de stockage ;
- des capteurs de hauteur d'aliment prévus à, dans ou à proximité de l'espace de stockage.

16. Système selon l'une quelconque des revendications 11 à 15, les moyens automatiques de dosage d'aliment (7) comprenant une évacuation latérale (7).

17. Système selon l'une quelconque des revendications 11 à 16, des moyens (17, 18) pour mesurer la hauteur d'aliment à l'emplacement d'alimentation étant prévus.

18. Système selon l'une quelconque des revendications 11 à 17, des moyens d'enregistrement d'image étant prévus pour déterminer ou estimer la quantité de culture fourragère (14) restant à l'emplacement d'alimentation (11).
